# EUROPÄISCHE PATENTSCHRIFT

(11) **EP 1 422 303 B1**
(45) Veröffentlichungstag und Bekanntmachung des Hinweises auf die Patenterteilung: **10.12.2008**
(21) Anmeldenummer: 03028014.3
(22) Anmeldetag: 30.03.2000
(51) Int. Cl.: C22C 1/08, B22F 3/00, C22B 7/00, C22B 19/30

(54) **Verfahren zur Herstellung von Metallschaumkörpern auf Basis von Zink**
Method of producing metal foam bodies of Zn-alloys
Procédé de fabrication des articles d'une mousse métallique en Zn

(30) Priorität: 23.06.1999 DE 19928686
(43) Veröffentlichungstag der Anmeldung: 26.05.2004
(62) Teilanmeldung aus: 00920630.1
(73) Patentinhaber: Grillo-Werke AG, D-47169 Duisburg (DE)
(72) Erfinder: Melzer, Armin, 46535 Dinslaken (DE); Spriestersbach, Jochen, 47058 Duisburg (DE)
(74) Vertreter: Meyers, Hans-Wilhelm

(56) Entgegenhaltungen:
- DE-C- 4 018 360
- US-A- 3 087 807
- US-A- 3 790 365
- US-A- 3 940 262
- US-A- 5 393 485
- BANHART J ET AL: "ALUMINIUMSCHAUM - ENTWICKLUNGEN UND ANWENDUNGSMOEGLICHKEITEN" INGENIEUR WERKSTOFFE, SPRINGER VDI VERLAG, DUSSELDORF, DE, Bd. 7, Nr. 1, April 1998 (1998-04), Seiten 43-45, XP000800267 ISSN: 0935-5715
- BAUMGÄRTNER: "Bauteile aus aluminiumschäumen" NGENIEUR-WERKSTOFFE, 1998, Seiten 42-45,
- COHRT: "Symposium aluminiumschäume" StartDateMarker 1997, EndDateMarker * das ganze Dokument *

## Beschreibung

Gegenstand der vorliegenden Erfindung ist ein Verfahren zur Herstellung von Metallschaumkörpern auf Basis von Zink enthaltend außer Zink und den üblichen Verunreinigungen 2 bis 20 Gew.-% Aluminium.

Metallschäume werden nach verschiedenen Verfahren hergestellt und werden in verschiedenster Weise verwendet. Eine gemeinsame Eigenschaft aller Schäume ist, dass geringe Gewicht/Volumen und im allgemeinen eine bezogen auf das Gewicht hohe mechanische Stabilität. Weitere Eigenschaften von Metallschäumen sind die geringere elektrische Leitfähigkeit, die geringere Wärmeleitfähigkeit und die Schalldämmung. Je nach Herstellungsverfahren erhält man geschlossenporige Schäume oder offenporige Schäume, die gelegentlich auch nur als poröse Strukturen bezeichnet werden. Je nach Herstellungsverfahren und weiterer Verarbeitung können die Poren mehr oder weniger kugelförmig sein oder linsenförmig oder längliche Formen aufweisen. Je nach Herstellungsverfahren können auch innerhalb eines Schaumkörpers Bereiche mit verschiedener Porengröße und verschiedener Wandstärke entstehen. Darüber hinaus werden Metallschäume auch gezielt zu Sandwichstrukturen verarbeitet oder in Hohlkörper oder für Hohlprofile eingebracht.

Bei schmelzmetallurgischen Schäumverfahren hat es sich vielfach bewährt, in die Metallschmelze viskositätserhöhende Legierungselemente oder aber in der Metallschmelze unlösbare Festkörper einzumischen. Bewährt haben sich auch Schäumverfahren, bei denen dem Metall und gegebenenfalls viskositätserhöhenden Zusätzen Treibmittel zugesetzt werden, die sich oberhalb gewisser Temperaturen zersetzen und dadurch den Schaum bilden. Als Treibmittel können somit Stoffe eingesetzt werden wie Metallhydride, Carbonate, Hydrate, pulverisierte organische Substanzen, Stickstoffverbindungen wie Nitride, Hydroxide, Hydrogencarbonate oder Mischungen aus Oxiden mit Kohlenstoff, die dadurch indirekt Gase bilden; vgl. hierzu auch die DE-A-198 13 176, in welcher auch das sogenannte Druckgussverfahren ausführlicher beschrieben ist. Spezielle Verfahren unter Verwendung spezieller Legierungen und spezieller Treibmittel sind beschrieben in der US-A-3,087,807 und US-A-3,758,291.

Metallschäume mit anisotropen thermischen und elektrischen Leitfähigkeiten sind beispielsweise beschrieben in der DE-C-44 24 157. Weitere Verfahren sind beschrieben in der DE-C-41 01 630, der DE-C-41 24 591, der DE-C-40 18 360. Hierin wird die Herstellung von Metallschäumen, insbesondere Aluminiumschäumen beschrieben, wobei das Metallpulver heiß kompaktiert wird. Spezielle Metallschäume und ihre Verwendung zur Schalldämmung und elektromagnetischen Abschirmung sind beschrieben in der EP 0 210 803 B1. Weiterhin wird verwiesen auf die Publikation im Symposium Metallschäume 6-7.3, 1997, Bremen, erschienen im MIT Verlag mit den Beiträgen von J. Baumeister, auf den Seiten 3 bis 13, M. Hartmann und R. F. Singer auf den Seiten 39 bis 57 und P. Weigand und J. Banhart auf den Seiten 91 bis 102. In diesem letzten Beitrag findet sich auch ein Abschnitt auf den Seiten 94 bis 96 über das Expansionsverhalten von Zinkschäumen, bei denen als Treibmittel Zirkoniumhydroxid gewählt wurde. In diesen Untersuchungen ging es vor allen Dingen um das Schäumverhalten dieser Metalle und die mechanischen Eigenschaften der so erhaltenen Schäume. Die Anwendung von Aluminiumschaum/Leichtbaustrukturen für den Fahrzeugbau findet sich in einem Artikel von Banhart, Baumeister, Melzer, Seeliger und Weber in Werkstoffe 98.

In diesem Stand der Technik zur Herstellung und Verwendung von Metallschaum wurde bei der Auswahl der Legierungen immer nur Wert gelegt auf das Verhalten beim Schäumen und die Eigenschaften des fertigen Schaums, wobei die Porenstruktur, erreichbare Schaumdichte und die isotropen oder anisotropen Eigenschaften im Vordergrund standen. Praktisch keine Beachtung gefunden haben hingegen die Korrosionseigenschaften der Metallschäume, wobei insbesondere bei offenporigen Schäume, d.h. Teilen mit porösen Strukturen durch Eindringen von Flüssigkeiten mehr oder weniger starke Korrosionen auftreten können. Auch bei der Herstellung von Sandwichstrukturen hat sich herausgestellt, dass die Werkstoffauswahl sowohl der aufschäumbaren Legierungen als auch die der Deckbleche großen Einfluss haben auf das Korrosionsverhalten.

Die vorliegende Erfindung hat sich somit die Aufgabe gestellt, Verfahren zur Herstellung von Metallschäumen auf Basis von Zink zur Verfügung zu stellen, die einerseits gut verarbeitbar sind, andererseits gute mechanische Eigenschaften aufweisen und darüber hinaus gute Korrosionseigenschaften aufweisen. Angestrebt wird dabei eine möglichst geringe spezifische Dichte bei guten mechanischen Eigenschaften.

Diese Aufgabe wurde jetzt gelöst durch ein Verfahren gemäß Anspruch 1.

Vorzugsweise enthalten die Legierungen 2 bis 16 Gew.-% Aluminium. Optimale Eigenschaften findet man bei einem Gehalt von 4 bis 16 Gew.-% Aluminium.

Darüber hinaus lassen sich die Eigenschaften sowohl beim Schäumen als auch bei den fertigen Schäumen und insbesondere bezüglich der Korrosionseigenschaften optimieren, in dem man bis zu 4 Gew.-% Kupfer, bis zu 4 Gew.-% Magnesium, bis zu 2 Gew.-% Mangan, bis zu 2 Gew.-% Titan und bis zu 0,1% Indium zumischt oder zulegiert.

Um Sandwichstruktur aufzubauen, sind Deckbleche aus Aluminium, Zink, Stahl und/oder verzinktem Stahl besonders gut geeignet. Weiterhin lassen sich die erfindungsgemäßen Metallschäume sehr gut einbringen ins Innere von Hohlkörpern oder Hohlprofilen, die aus Aluminium, Zink, Stahl und/oder verzinktem Stahl bestehen.

Überraschenderweise findet man besonders vorteilhafte Eigenschaften sowohl beim Schäumen als auch bei den endgültigen Eigenschaften des Schaums, wenn man zu den oben genannten Zinklegierungen Zinkpulver und/oder Aluminiumpulver und/oder Zink-Aluminium-Legierungspulver zumischt, welche beim thermischen Spritzen und/oder beim Sprühkompaktieren und/oder bei Wiederaufbereitungsprozessen der Metalle und/oder Legierungen anfallen. Die Pulver aus Zink, Aluminium und/oder Zink-Aluminium-Legierungen, die beim thermischen Spritzen anfallen, werden meist als Overspraypulver bezeichnet und wurden bisher an die Lieferanten der Drähte für das thermische Spritzen zurückgeschickt. Sie konnten bisher nicht unmittelbar zur Verarbeitung in metallischen Werkstoffen verwendet werden, da diese Pulver mit einer relativ starken Oxidhaut umgeben sind. Das gleiche gilt für Pulver, die beim Sprühkompaktieren oder bei anderen Aufbereitungsprozessen als Zinkstaub, Aluminiumstaub oder Zink-Aluminium-Legierungsstaub anfallen, z.B. auch als Filterstaub an Filteranlagen. Diese Pulver haben im allgemeinen Korngrößen zwischen 5 und 1.000 µm. Nach dem Stand der Technik wurde bereits eine dünne Oxidhaut von Aluminiumpulver als störend und schädlich angesehen; vgl. Baumeister, loc. cit. Seite 8.

Es hat sich herausgestellt, dass überraschenderweise diese mit einer Oxidhaut umgebenen Abfälle in hervorragender Weise in größeren Mengen mitverwendet werden können zur Herstellung der erfindungsgemäßen Metallschaumkörper. Anscheinend führt die an sich unerwünschte Oxidhaut zu einer mechanischen Stabilisierung während des Schäumungsprozesses. Je nach Zusammensetzung dieser Pulver können darüber hinaus die Korrosionseigenschaften der Schaumkörper verbessert werden. Zumindest werden durch diese Teilchen die Korrosionseigenschaften nicht verschlechtert.

Die Verbesserung der Eigenschaften macht sich in einigen Fällen schon ab 0,5 Gew.-% Zusatz von Overspraypulver bemerkbar. Erst bei Verwendung von mehr als 80 Gew.-% Overspraypulver aus dem thermischen Spritzprozess leidet der mechanische Zusammenhang der Schaumkörper beim Komprimieren. Vorzugsweise werden daher 2 bis 40 Gew.-% und insbesondere 5 bis 30 Gew.-% Overspraypulver zugesetzt.

Die Korrosionseigenschaften sowohl der Metallschaumkörper als auch der Sandwichstruktur mit den erfindungsgemäßen Metallschaumkörper werden beispielsweise getestet im Salzsprühtest DIN 500 21/ss sowie im Kondenswassertest/SO₂-Test nach DIN 500 18. Es hat sich gezeigt, dass die Korrosion um ein mehrfaches verringert werden kann. Störend wirken hingegen Verunreinigungen von mehr als 0,1 Gew.-% Eisen, welches vor allen Dingen die interkristalline Korrosion fördert und die mechanischen Eigenschaften verschlechtert.

Demgegenüber sind die genannten Zusätze von Kupfer, Magnesium, Mangan, Titan aber auch Indium in der Lage, Korrosionseigenschaften und die mechanischen Eigenschaften zu verbessern.

Als Treibmittel haben sich insbesondere bewährt Zirkonhydrid, Titanhydrid und Magnesiumhydrid, wobei sich das dabei bildende Titan und/oder Magnesium auch positiv bezüglich Schäumungsverhalten und Korrosionseigenschaften auswirken können.

Bei der Herstellung von Sandwichstrukturen oder gefüllten Hohlkörpern oder Hohlprofilen haben sich vor allem Aluminium, Zink, Stahl und/oder verzinkter Stahl bewährt, da diese in der Lage sind, an den Kontaktstellen zu dem Metallschaum Lötverbindungen zu bilden. Zink-Aluminium-Legierungen verfügen über hervorragende Löteigenschaften für diese oben genannten Werkstoffe. Bei Verwendung von Stahldeckblechen wirkt der erfindungsgemäße Metallschaumkörper gleichzeitig als kathodischer Korrosionsschutz für den Stahl. Dadurch werden Sandwichstrukturen, Hohlkörper oder Hohlprofile von Innen heraus gegen Korrosion geschützt.

Besonders vorteilhaft werden Deckbleche oder Hohlkörper aus Aluminium, Zink oder verzinktem Stahl verwendet, weil sie beim Aufschäumen mit den erfindungsgemäß verwendeten Zinklegierungen auflegieren können, dabei den Schmelzpunkt erhöhen und zu einer zusätzlichen Stabilisierung des Schaums und der Übergangszonen zwischen dem Schaum und den ihn begrenzenden Deckblechen oder Hohlprofil führen.

Zur Formgebung kann aber auch Glas verwendet werden, welches sich beim Aufschäumen der Legierungen praktisch nicht verformt und auch nicht mit den Zinklegierungen verklebt, so dass es mehrfach oder für längere Fertigungszeiten geeignet ist und dabei gute Maßhaltigkeit gestattet. Der Aufschäumprozess kann dabei sogar optisch überwacht werden.

Das Zink, das Aluminium oder die Zink-Aluminium-Legierung werden in Form von Pulver eingesetzt. Die Korngrößen sollten vorzugsweise im Bereich zwischen 50 und 4.000 µm liegen. Diese Legierungen lassen sich auch vor dem Schäumprozess durch Walzen, Plattieren und Umformen verarbeiten oder zu Drähten ziehen, die dann zum Metallschaumkörper weiterverarbeitet werden. Als sehr vorteilhaft hat sich zudem herausgestellt, das schäumbare Halbzeug zu einem Granulat im Bereich zwischen 2 und 20 mm zu verarbeiten und dieses Granulat in Schaumformen zu geben und anschließend aufzuschäumen.

In den nachfolgenden Beispielen sind typische Ausführungsformen beschrieben, die jedoch nicht den Gegenstand der Erfindung beschränken sollen.

### Beispiele

### Beispiel 1

Eine Pulvermischung bestehend aus 14 Gew.-% Aluminium, 0,8 Gew.-% Zirkonhydrid (ZrH) und Rest Zink wurde kompaktiert. Anschließend wurde der Preßling aufgeschäumt. Es wurde eine Dichte von 0,7 g/cm³ erreicht. Im Salzsprühtest nach DIN 500 21-ss haben die erfindungsgemäßen Schaumstrukturen eine deutlich verbesserte Korrosionsbeständigkeit gegenüber geschäumten Feinzinklegierungen gezeigt. Der Abtrag konnte etwa um das 5-fache verringert werden. Im Kondenswassertest/SO₂-Test nach DIN 500 18 wurden erheblich verbesserte Korrosionsbeständigkeit erzielt. Der Abtrag konnte hier um mehr als das 10-fache verbessert werden.

### Beispiel 2

Eine Pulvermischung bestehend aus 4 Gew.-% Aluminium, 0,8 Gew.-% Zirkonhydrid (ZrH) und Rest Zink wurde kompaktiert. Anschließend wurde das schäumbare Halbzeug mit Deckblechen aus Aluminium plattiert. Diese Sandwichstrukturen wurden anschließend aufgeschäumt. Hierbei wurde eine Schaumdichte von 0,6 g/cm³ erreicht. Die Deckbleche überstanden den Schäumprozess ohne merkliche Veränderungen. Es entstand in der Zone zwischen Schaum und Aluminiumdeckblech eine feste schmelzmetallurgische Verbindung.

### Beispiel 3

Eine Pulvermischung bestehend aus 4 Gew.-% Aluminium, 0,8 Gew.-% Zirkonhydrid (ZrH) und Rest Zink wurde kompaktiert. Anschließend wurde das schäumbare Halbzeug mit Deckblechen aus verzinktem Stahl und unverzinktem Stahl plattiert. Diese Sandwichstrukturen wurden anschließend aufgeschäumt. Hierbei wurde eine Schaumdichte von 0,6 g/cm³ erreicht. Die Deckbleche überstanden den Schäumprozess ohne merkliche Veränderungen. Die Haftung der Deckbleche war in beiden Fällen sehr hoch.

### Beispiel 4

Eine Pulvermischung bestehend aus 5 Gew.-% Zink "Overspray", 5 Gew.-% Aluminium "Overspray", 5 Gew.-% ZnAl15 "Overspray", 0,8 Gew.-% Zirkonhydrid (ZrH), 10 Gew.-% Aluminium und Rest Zink wurde kompaktiert. Es wurden eine Schaumdichte von 0,5 g/cm³ erreicht. Die Porenstruktur des Schaumkörpers war sehr homogen und feinporig. Die Stabilität des Schaums im Schäumprozess war deutlich erhöht. Das Korrosionsverhalten ist vergleichbar mit den erfindungsgemäßen Legierungen aus Beispiel 1.

### Beispiel 5

Eine Pulvermischung bestehend aus 14 Gew.-% Aluminium, 1,0 Gew.-% Zirkonhydrid (ZrH) und Rest Zink wurde kalt vorgepresst und anschließend auf einer Strangpresse kompaktiert. Anschließend wurde das Halbzeug aufgeschäumt. Es wurde eine Dichte von etwa 0,5 g/cm³ erreicht. Im Salzsprühtest nach DIN 21-ss haben die erfindungsgemäßen Schaumstrukturen eine deutlich verbesserte Korrosionsbeständigkeit gegenüber geschäumten Feinzinklegierungen gezeigt. Der Abtrag konnte etwa um das 5-fache verringert werden. Im Kondenswassertest/SO₂-Test nach DIN 500 18 wurde erheblich verbesserte Korrosionsbeständigkeit erzielt. Der Abtrag konnte hier um mehr als das 10-fache verbessert werden. Der gleiche Versuch wurde auch mit 1,0 Gew.-% Titanhydrid statt Zirkonhydrid durchgeführt und führte zu vergleichbaren Ergebnissen. Lediglich die Schaumdichte lag etwas höher als bei Zirkonhydrid.

### Beispiel 6

Eine Pulvermischung bestehend aus 15 Gew.-% Aluminium, 1,0 Gew.-% Zirkonhydrid (ZrH) und Rest Zink wurde kalt vorgepresst und anschließend auf einer Strangpresse kompaktiert. Anschließend wurde das schäumbare Halbzeug mit Deckblechen aus Aluminium plattiert. Diese Sandwichstrukturen wurden anschließend bei einer Temperatur im Bereich von 500°C aufgeschäumt. Es wurde einer sehr hohe Schaumstabilität beobachtet, die darauf zurückzuführen ist, dass sich die Schaumlegierung im Schäumprozess in ihrem Schmelzpunkt durch Auflegierungsprozesse mit Aluminium erhöht hat. Es wurde eine Schaumdichte von etwa 0,5 g/cm³ erreicht. Es entstand in der Zone zwischen Schaum und Aluminiumdeckblech eine feste schmelzmetallurgische Verbindung.

### Beispiel 7

Eine Pulvermischung bestehend aus 4 Gew.-% Aluminium, 1,0 Gew.-% Kupfer, 1,0 Gew.-% Zirkonhydrid (ZrH) und Rest Zink wurde kalt vorgepresst und anschließend auf einer Strangpresse kompaktiert. Anschließend wurde das schäumbare Halbzeug mit Deckblechen aus Aluminium plattiert. Diese Sandwichstrukturen wurden anschließend bei einer Temepratur im Bereich von 420°C aufgeschäumt. Es wurde eine sehr hohe Schaumstabilität beobachtet, die darauf zurückzuführen ist, dass sich die Schaumlegierung im Schäumprozeß in ihrem Schmelzpunkt durch auflegierungsprozesse mit Aluminium erhöht hat. Es wurde eine Schaumdichte von etwa 0,5 g/cm³ erreicht. Es entstand in der Zone zwischen Schaum und Aluminiumdeckblech eine feste schmelzmetallurgische Verbindung. Der gleiche Versuch wurde auch ohne Kupfer als Legierungselement durchgeführt und führte zu einem vergleichbaren Ergebnis.

### Beispiel 8

Eine Pulvermischung bestehend aus 4 Gew.-% Aluminium, 1,0 Gew.-% Kupfer, 1,0 Gew.-% Zirkonhydrid (ZrH) und Rest Zink wurde kalt vorgepresst und anschließend auf einer Strangpresse kompaktiert. Anschließend wurde das schäumbare Halbzeug mit Deckblechen aus verzinkten Stahlblechen plattiert. Diese Sandwichstrukturen wurden anschließend bei einer Temperatur im Bereich von 420°C aufgeschäumt. Es wurde eine sehr hohe Schaumstabilität beobachtet, die darauf zurückzuführen ist, dass sich die Schaumlegierung im Schäumprozeß in ihrem Schmelzpunkt durch Auflegierungsprozesse mit Zink erhöht hat. Es wurde eine Schaumdichte von etwa 0,5 g/cm³ erreicht. Es entstand in der Zone zwischen Schaum und Deckblech eine feste schmelzmetallurgische Verbindung. Der gleiche Versuch wurde auch ohne Kupfer als Legierungselement durchgeführt und führte zu einem vergleichbaren Ergebnis.

### Beispiel 9

Eine Pulvermischung bestehend aus 4 Gew.-% Aluminium, 1,0 Gew.-% Kupfer, 1,0 Gew.-% Zirkonhydrid (ZrH) und Rest Zink wurde kalt vorgepresst und anschließend auf einer Strangpresse kompaktiert. Anschließend wurde das schäumbare Halbzeug mit Deckblechen aus Zinkblechen plattiert. Diese Sandwichstrukturen wurden anschließend bei einer Temepratur im Bereich von 400°C aufgeschäumt. Es wurde eine sehr hohe Schaumstabilität beobachtet, die darauf zurückzuführen ist, dass sich die Schaumlegierung im Schäumprozeß in ihrem Schmelzpunkt durch Auflegierungsprozesse mit Zink erhöht hat. Es wurde eine Schaumdichte von etwa 0,5 g/cm³ erreicht. Es entstand in der Zone zwischen Schaum und Zinkdeckblech eine feste schmelzmetallurgische Verbindung. Der gleiche Versuch wurde auch ohne Kupfer als Legierungselement durchgeführt und führte zu einem vergleichbaren Ergebnis.

### Beispiel 10

Vier Pulvermischungen bestehend aus 2, 4, 16 und 20 Gew.-% Aluminium, 1,0 Gew.-% Zirkonhydrid (ZrH) und Rest Zink wurden kalt vorgepresst und anschließend auf einer Strangpresse in Drahtform mit einem Durchmesser von 6 mm kompaktiert. Die auf diese Weise hergestellten Drähte wurden zu einem Granulat verarbeitet. Die Länge der Abschnitte lag in einem Bereich von 6-10 mm. Anschließend wurde das auf die gleiche Weise hergestellt Granulat in Schäumformen aus Aluminium, Stahl, verzinktem Stahl und Glas aufgeschäumt. Es wurden Dichten im Bereich 0,5 g/cm³ erreicht. Die Porenstruktur des Schaumkörpers war sehr homogen und feinporig. Die Stabilität des Schaums im Schäumprozeß war sehr hoch. Das Korrosionsverhalten ist vergleichbar mit den erfindungsgemäßen Legierungen aus Beispiel 1. Der gleiche Versuch wurde auch mit 1,0 Gew.-% Titanhydrid statt Zirkonhydrid durchgeführt und führte zu vergleichbaren Ergebnissen. Lediglich die Schaumdichte lag etwas höher als bei Zirkonhydrid.

### Beispiel 11

Eine Pulvermischung bestehend aus 80 Gew.-% ZnAll5 "Overspray-pulver" aus dem thermischen Spritzprozeß, 1,0 Gew.-% Zirkonhydrid (ZrH) und Rest Zink wurde kalt vorgepresst und anschließend auf einer Strangpresse kompaktiert. Es wurde eine Schaumdichte von etwa 0,5 g/cm³ erreicht. Die Porenstruktur des Schaumkörpers war sehr homogen und feinporig. Die Stabilität des Schaums im Schäumprozeß war sehr hoch. Das Korrosionsverhalten ist vergleichbar mit den erfindungsgemäßen Legierungen aus Beispiel 1.

## Patentansprüche

1. Verfahren zur Herstellung von Metallschaumkörpern auf Basis von Zink, enthaltend außer Zink und den üblichen Verunreinigungen 2 bis 20 Gew.-% Aluminium, aus einem Treibmittel und Metallpulver, **dadurch gekennzeichnet, dass** das Treibmittel und das Pulver kalt verpresst und auf einer Strangpresse kompaktiert werden und das verpresste Material durch Erhitzen aufgeschäumt wird, wobei das Metallpulver 2 bis 80 Gew.% Pulver enthält, welches beim thermischen Spritzen, Sprühkompaktieren oder bei Wiederaufbereitungsprozessen von Metallen und/oder Legierungen anfällt.

2. Verfahren gemäß Anspruch 1, **dadurch gekennzeichnet, dass** bis zu 4 Gew.-% Kupfer, bis zu 4 Gew.-% Magnesium, bis zu 2 Gew.-% Mangan, bis zu 2 Gew.-% Titan und bis zu 0,1 Gew.-% Indium zulegiert werden.

3. Verfahren gemäß einem der Ansprüche 1 und/oder 2, **dadurch gekennzeichnet, dass** die Metallschaumkörper 4 bis 16 Gew.-% Aluminium enthalten.

4. Verfahren gemäß einem der Ansprüche 1 bis 3, **dadurch gekennzeichnet, dass** die Metallschaumkörper in eine Sandwichstruktur mit Deckblechen aus Aluminium, Zink, Stahl und/oder verzinktem Stahl eingebaut werden.

5. Verfahren gemäß einem der Ansprüche 1 bis 3**, dadurch gekennzeichnet, dass** die Metallschaumkörper in das Innere von Hohlkörpern oder Hohlprofilen aus Aluminium, Zink, Stahl und/oder verzinktem Stahl eingebaut werden.

## Claims

1. A method for preparing zinc-based metal foamed bodies containing, in addition to zinc and the usual impurities, from 2 to 20% by weight of aluminum, from a foaming agent and a metal powder, **characterized in that** said foaming agent and powder are subjected to cold pressing and compacting on an extruder, and the compressed material is foamed by heating, wherein said metal powder contains from 2 to 80% by weight of powder obtained in thermal spraying, spray-compacting or regeneration processes of metals and/or alloys.

2. The method according to claim 1, **characterized in that** up to 4% by weight of copper, up to 4% by weight of magnesium, up to 2% by weight of manganese, up to 2% by weight of titanium and up to 0.1% by weight of indium are included in the alloy.

3. The method according to either of claims 1 and/or 2, **characterized in that** said metal foamed bodies contain from 4 to 16% by weight of aluminum.

4. The method according to any of claims 1 to 3, **characterized in that** said metal foamed bodies are incorporated in a sandwich structure with cover sheets of aluminum, zinc, steel and/or zinc-plated steel.

5. The method according to any of claims 1 to 3, **characterized in that** said metal foamed bodies are incorporated in the interior of hollow bodies or hollow section parts of aluminum, zinc, steel and/or zinc-plated steel.

## Revendications

1. Procédé de fabrication de corps en mousse métallique à base de zinc, contenant, en plus du zinc et des impuretés habituelles, de 2 % en poids à 20 % en poids d'aluminium, un agent d'expansion et de la poudre métallique,
**caractérisé en ce que** l'agent d'expansion et la poudre métallique sont compressés à froid et compactés sur une extrudeuse, et le matériau compressé est expansé par chauffage, la poudre métallique contenant de 2 % en poids à 80 % en poids de poudre qui est produite lors de l'injection thermique, du compactage par pulvérisation ou lors de processus de retraitement de métaux et / ou d'alliages.

2. Procédé selon la revendication 1, **caractérisé en ce que** l'on ajoute, par alliage, jusqu'à 4 % en poids de cuivre, jusqu'à 4 % en poids de magnésium, jusqu'à 2 % en poids de manganèse, jusqu'à 2 % en poids de titane et jusqu'à 0,1 % en poids d'indium.

3. Procédé selon l'une des revendications 1 et / ou 2, **caractérisé en ce que** les corps en mousse métallique contiennent de 4 % en poids à 16 % en poids d'aluminium.

4. Procédé selon l'une des revendications 1 à 3, **caractérisé en ce que** les corps en mousse métallique sont insérés dans une structure sandwich comportant des tôles de recouvrement en aluminium, en zinc, en acier et / ou en acier galvanisé.

5. Procédé selon l'une des revendications 1 à 3, **caractérisé en ce que** les corps en mousse métallique sont insérés à l'intérieur de corps creux ou de profilés creux en aluminium, en zinc, en acier et / ou en acier galvanisé.
